# FASCICULE DE BREVET EUROPEEN

(11) **EP 3 063 550 B1**
(45) Date de publication et mention de la délivrance du brevet: **12.09.2018**
(21) Numéro de dépôt: 14793504.3
(22) Date de dépôt: 30.10.2014
(51) Int. Cl.: G01S 7/24, G01S 13/86, G01S 13/89, G01C 23/00, G06F 3/0481

(54) **TERMINAL D'OPÉRATEUR À AFFICHAGE DE ZONES DE QUALITÉ DE PRISES DE VUES**
BEDIENERENDGERÄT MITANZEIGE DER ZONEN DER BILDAUFNAHMEQUALITÄT
OPERATOR TERMINAL WITH DISPLAY OF ZONES OF PICTURE TAKING QUALITY

(30) Priorité: 30.10.2013 FR 1302517
(43) Date de publication de la demande: 07.09.2016
(73) Titulaire: THALES, 92200 Neuilly sur Seine (FR)
(72) Inventeur: LABORDE, Pierre, F-29238 Brest Cedex 3 (FR); LE PORS, Eric, F-29238 Brest Cedex 3 (FR)
(74) Mandataire: Lavoix
(86) Numéro de dépôt international: PCT/EP2014/073294
(87) Numéro de publication internationale: WO 2015/063198

(56) Documents cités:
- US-A1- 2011 299 734
- US-B2- 7 411 196
- Kevin Baker ET AL: "Advanced Integrated Multi-Sensor Surveillance (AIMS. Operator Machine Interface (OMI) Definition Study", DRDC Atlantic Contract Scientific Authority: Sharon McFadden, 1 février 2007 (2007-02-01), pages 635-2189, XP055119063, Extrait de l'Internet: URL:http://www.dtic.mil/docs/citations/ADA 475282 [extrait le 2014-05-20]

## Description

La présente invention concerne un terminal d'opérateur d'un système de mission comportant au moins un écran d'affichage de données d'environnement d'un porteur mobile d'un système d'analyse de situation, ledit système d'analyse comportant au moins un capteur d'images et des moyens de fourniture en temps réel d'une position spatiale d'au moins un objet d'intérêt.

L'invention se situe dans le domaine des méthodes d'interaction homme-machine, adaptées au paramétrage de systèmes de mission.

Un système de mission permet à un ou plusieurs opérateurs de mener à bien une mission donnée, par exemple une mission de surveillance d'environnement, de reconnaissance ou de combat, à l'aide d'un système d'analyse de situation comportant divers capteurs (e.g. radars, caméras, détecteurs) et/ou effecteurs (e.g. brouilleurs, leurres). Le système de mission agrège des informations fournies par les divers capteurs, pour fournir une vision synthétique à l'opérateur, via une interface homme-machine (IHM). En outre, l'opérateur est amené à régler un ensemble de paramètres relatifs aux capteurs et/ou effecteurs, et à commander le fonctionnement des capteurs via l'interface homme-machine.

De tels systèmes de mission sont notamment destinés à être embarqués sur un porteur mobile (e.g. aéronef, véhicule terrestre, navire). Lors de missions de reconnaissance ou d'intervention, il est utile d'acquérir des images des objets d'intérêt observés, par exemple bateaux, camions, avions, en utilisant des capteurs embarqués du système d'analyse de situation. En général, un système d'analyse de situation comporte plusieurs capteurs de prise de vue, ou des capteurs aptes à fonctionner selon différents modes de prise de vue.

Par exemple, un type de capteur utilisé est une caméra électro-optique infrarouge, connue sous le nom de FLIR pour « forward looking infrared ». Il est également possible de générer des images d'objets d'intérêt en utilisant un capteur radar, selon plusieurs modes, par exemple le mode SAR pour « synthetic aperture radar » ou le mode ISAR pour « inverse synthetic aperture radar ».

Un opérateur d'un système de mission est amené à sélectionner le capteur de prise de vue adapté ou le mode de prise de vue adapté pour obtenir une image satisfaisante d'un objet d'intérêt, dans des conditions difficiles, le porteur et l'objet d'intérêt étant potentiellement en mouvement. En outre, l'opérateur doit tenir compte des conditions d'environnement (visibilité, secousses du porteur) pour sélectionner un moment de prise de vue adéquat pour obtenir une image exploitable de l'objet d'intérêt.

Le document « Advanced Integrated Multi-Sensor Surveillance (AIMS. Operator Machine Interface (OMI) Definition Study" DRDC Atlantic Contract Scientific Authority: Sharon Mc Fadden, 1 février 2007, pages 635-2189, décrit un système de surveillance multi-capteurs, porté par un aéronef.

De manière classique, il est prévu d'afficher sous forme de tableau d'affichage, des indications relatives à l'ensemble des capteurs et des modes de prises de vue disponibles à bord du porteur, éventuellement accompagnés d'une indication d'état « actif » ou « indisponible ». Bien que de telles indications aident un opérateur, elles sont insuffisantes, dans la mesure où le porteur et l'objet d'intérêt sont en mouvement. Ainsi, un opérateur peut déclencher une prise de vue par un capteur sélectionné juste avant que cette prise de vue ne soit plus possible, par exemple parce que l'objet d'intérêt se trouve hors du champ de capture du capteur sélectionné.

A cet effet, l'invention propose, selon un premier aspect, un terminal d'opérateur d'un système de mission comportant au moins un écran d'affichage de données d'environnement d'un porteur mobile d'un système d'analyse de situation, ledit système d'analyse comportant au moins un capteur d'images et des moyens de fourniture en temps réel d'une position spatiale d'au moins un objet d'intérêt. Le terminal d'opérateur comporte :
- un module d'obtention d'au moins une information de position représentative de la position du porteur et dudit au moins un objet d'intérêt,
- pour au moins un mode de prise de vues d'images d'un capteur d'images sélectionné, un module de calcul apte à fournir au moins deux zones de qualité de prise de vue distinctes, dans un périmètre spatial prédéterminé centré sur la position du porteur, chaque zone de qualité de prise de vue ayant un niveau de qualité associé, et
- un module d'affichage d'une cartographie desdites zones de qualité de prise de vue relativement à la position du porteur, dans le périmètre spatial prédéterminé,
lesdits modules d'obtention, de calcul et d'affichage étant mis en oeuvre pour obtenir un rafraîchissement quasi temps réel de ladite cartographie affichée.

De plus, le ou les capteurs d'images sont aptes à acquérir des images selon une pluralité de modes de prise de vues, le module de calcul de zones de qualité de prise de vue est mis en oeuvre pour chacun des modes de prise de vues, et le module d'affichage est apte à afficher, sur le même écran d'affichage, l'ensemble des zones de qualité de prise de vue relatives à chacun desdits modes de prise de vues.

Avantageusement, l'affichage rafraîchi sensiblement en temps réel d'une cartographie des zones de qualité de prise de vue, pour un ou plusieurs capteurs, facilite largement la prise de vue d'images exploitables, même dans des conditions d'utilisation en environnement contraint.

Le terminal d'opérateur selon l'invention peut également présenter une ou plusieurs des caractéristiques ci-dessous, prises indépendamment ou en combinaison.

Le terminal d'opérateur comporte, pour chaque mode de prises de vues, des zones de commande de prise de vue par l'opérateur et des zones de commande de prise de vue automatique, sélectionnables par l'opérateur et affichées sur le même écran d'affichage que ladite cartographie.

Le module d'affichage est apte à afficher en outre une indication visuelle relative de la position du porteur par rapport à la position relative de l'objet d'intérêt.

Le module de calcul est apte à déterminer au moins une zone de qualité de prise de vue ayant un niveau de qualité nominale et au moins une zone de qualité de prise de vue ayant un niveau de qualité dégradée.

La cartographie représente ledit objet d'intérêt à distance constante du porteur, et le module d'affichage est apte à afficher des informations de distance réelle entre le porteur et l'objet d'intérêt.

Le module d'affichage est apte à afficher une distance restante à parcourir par le porteur pour atteindre une zone de qualité de prise de vue nominale selon un mode d'acquisition prédéterminé.

Les zones de qualité de prise de vues affichées sont re-positionnées dans le périmètre spatial prédéterminé sensiblement en temps réel selon la distance réelle et les orientations relatives entre le porteur et l'objet d'intérêt.

Les zones de qualité de prise de vues sont affichées sous forme de portions d'anneaux concentriques, inscrits dans un périmètre circulaire centré sur l'objet d'intérêt et limité par un cercle externe, la situation des anneaux concentriques par rapport au cercle externe indiquant si le porteur est situé à distance suffisante de l'objet d'intérêt pour atteindre une zone de qualité correspondante.

Le module d'obtention d'au moins une information de position permet d'obtenir une distance entre le porteur et l'objet d'intérêt et un angle de rotation relatif entre l'objet d'intérêt et le porteur.

Le module de calcul prend en compte, pour la détermination des zones de qualité de prise de vues, des conditions externes d'environnement du porteur et/ou de l'objet d'intérêt.

Selon un deuxième aspect, l'invention concerne un système de mission comportant au moins un écran d'affichage de données d'environnement d'un porteur mobile d'un système d'analyse de situation, ledit système d'analyse comportant au moins un capteur d'images et des moyens de fourniture en temps réel d'une position spatiale d'au moins un objet d'intérêt. Ce système de mission comporte un terminal d'opérateur tel que brièvement décrit ci-dessus.

D'autres caractéristiques et avantages de l'invention ressortiront de la description qui en est donnée ci-dessous, à titre indicatif et nullement limitatif, en référence aux figures annexées, parmi lesquelles :
- la figure 1 est une représentation schématique des modules d'un système de mission selon un mode de réalisation de l'invention ;
- la figure 2 est une illustration d'une vue d'affichage relative à un mode de prise de vues d'image selon un premier mode de réalisation de l'invention ;
- la figure 3 est une illustration d'une vue d'affichage relative à une pluralité de modes de prise de vues d'image selon un deuxième mode de réalisation de l'invention ;
- les figures 4 et 5 sont des illustrations de vues d'affichage relatives à une pluralité de modes de prise de vues d'image selon une variante du deuxième mode de réalisation de l'invention ;
- la figure 6 illustre un exemple d'interface homme-machine complète selon un mode de réalisation de l'invention.

L'invention sera décrite ci-après dans un mode de réalisation dans lequel le terminal d'opérateur est embarqué sur un porteur mobile de type aéronef, véhicule terrestre ou plateforme navale, équipé d'un système d'analyse de situation comportant une pluralité de capteurs de prise de vue, appelés également capteurs d'images.

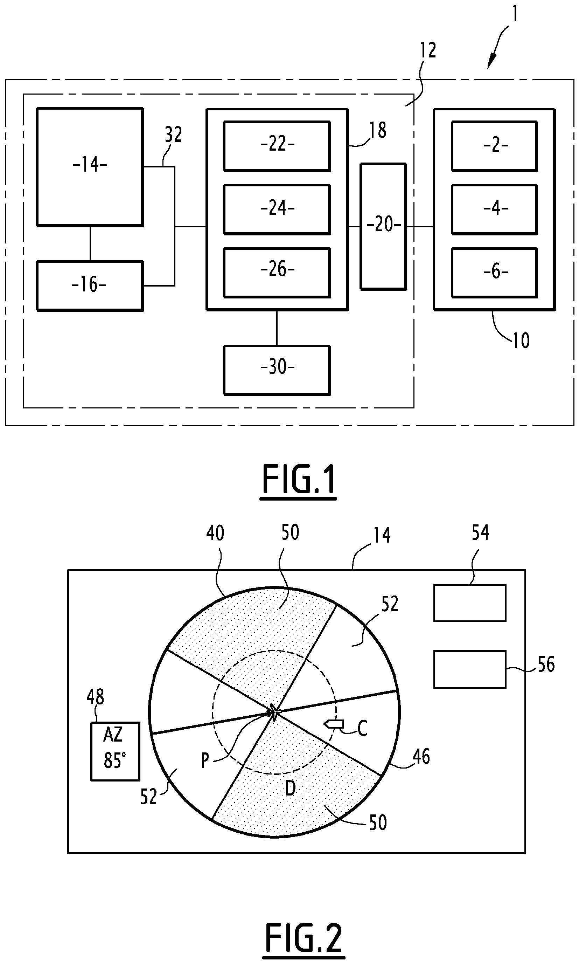

Un exemple de système de mission 1 selon l'invention est illustré schématiquement à la figure 1.

Ce système de mission 1 comporte un premier capteur de prise de vues 2 et un deuxième capteur de prise de vues 4, et un détecteur 6 de position d'objets ou cibles à surveiller (non représentés sur la figure).

Par exemple, le premier capteur 2 est un capteur infrarouge de type FLIR et le deuxième capteur 4 est un capteur radar apte à fonctionner en mode SAR et/ou en mode ISAR.

Les capteurs 2, 4 et le détecteur 6 font partie d'un système d'analyse de situation 10 embarqué sur un porteur de type aéronef (non représenté sur la figure).

Dans un scénario d'utilisation typique, le porteur et le ou les objets d'intérêt sont en mouvement.

Le système de mission 1 comporte également un terminal d'opérateur 12, qui peut soit être embarqué à bord du porteur, soit être situé dans un centre de commande au sol.

Le terminal d'opérateur 12 comprend un ou plusieurs écrans d'affichage 14, de préférence tactiles, un module 16 de saisie des commandes d'un opérateur, qui est par exemple un module de saisie de commandes tactiles, permettant de sélectionner des éléments graphiques affichés sur l'écran 14, une unité centrale de traitement 18, ou CPU, apte à exécuter des instructions de programme informatique lorsque le terminal 12 est mis sous tension.

Une interface de communication 20 permet de recueillir des informations du système d'analyse de situation 10 et de fournir des commandes au système d'analyse de situation 10.

L'unité centrale de traitement 18 met en oeuvre un module 22 d'obtention d'au moins une information de position représentative de la position du porteur relativement à un objet d'intérêt, un module 24 de calcul de zones de qualité de prise de vue distinctes relatives au modes de prise de vues des capteurs d'images 2, 4. Chaque zone de qualité de prise de vue a un niveau de qualité associé.

Une telle information de position comprend typiquement la distance entre le porteur et l'objet d'intérêt, le gisement, l'azimut de chacun, un angle de rotation relatif entre le porteur et l'objet d'intérêt.

En outre, l'unité centrale de traitement 18 met en oeuvre un module 26 d'affichage d'une cartographie des zones de qualité de prise de vue relativement à la position du porteur, dans un périmètre spatial prédéterminé, comme expliqué plus en détail ci-après en référence aux figures 2 à 6.

Le terminal 12 comporte également des moyens de stockage d'informations 30, par exemple des registres, aptes à stocker des instructions de code exécutable et des valeurs de paramètres pour la mise en oeuvre de programmes comportant des instructions de code aptes à mettre en oeuvre l'affichage de cartographie de zones de qualité de prises de vue selon l'invention.

Les divers blocs fonctionnels du terminal 12 décrits ci-dessus sont connectés via un bus de communication 32.

La figure 2 illustre une cartographie 40 représentative de la qualité de prise de vues associée à un capteur d'images donné et à un mode de prise de vues d'images donné, préalablement sélectionné par l'utilisateur, et pour un objet d'intérêt préalablement sélectionné, affichée sur une interface homme-machine de l'écran d'affichage 14. Par exemple, le capteur d'images 4 fonctionnant en mode de prise de vues SAR est sélectionné.

En variante, la cartographie 40 représentative de la qualité de prise de vues est affichée sur une portion d'un des écrans d'affichage du terminal d'opérateur 12.

La cartographie 40 est rafraîchie en temps réel, selon la position du porteur P et de l'objet d'intérêt C. Comme illustré en figure 2, la représentation sélectionnée est une représentation circulaire centrée sur le porteur P. De préférence, la représentation est effectuée dans un périmètre circulaire 46 ayant une dimension fixée sur l'écran d'affichage, et l'objet d'intérêt C est représenté à distance constante du porteur P dans ce périmètre 46. La distance réelle D entre le porteur P et l'objet d'intérêt C est indiquée à l'opérateur et rafraîchie en temps réel.

L'interface homme-machine comporte également une indication 48 relative à la trajectoire du porteur, par exemple son azimut (noté AZ) qui est de 85° dans l'exemple de la figure 2.

Le périmètre 46 est partitionné par zones de qualité de prise de vue 50, 52, chacune ayant un niveau de qualité de prise de vue associé. Le niveau de qualité est indiqué visuellement selon un indicateur visuel prédéterminé, facilement intelligible par l'opérateur, l'indicateur visuel étant par exemple par une couleur ou une texture de remplissage associée. Ainsi, les zones annotées 50 correspondent à un premier niveau de qualité nominale, qui est un niveau de qualité satisfaisant, moyen à bon, et les zones annotées 52 correspondent à une prise de vue dégradée, de deuxième niveau de qualité bien inférieur au premier niveau de qualité.

Ainsi, dans l'exemple de la figure 2, l'objet d'intérêt C est dans la zone 52 dans laquelle la prise de vue par le capteur 2 est dégradée, donc non recommandée.

Avantageusement, l'opérateur peut facilement décider si le capteur sélectionné est utilisable ou non, grâce à la cartographie 40 par zones de qualité de prise de vue. De plus, grâce à l'ensemble d'informations affichées et grâce au rafraîchissement temps réel des informations affichées, il peut modifier efficacement la trajectoire du porteur P pour réaliser la prise de vue avec le capteur sélectionné.

En outre, l'interface homme-machine comporte des objets graphiques 54, 56 sélectionnables, par exemple par un click ou une pression de doigt de l'opérateur sur l'écran tactile, permettant de sélectionner un des capteurs ou un des modes de prise de vues disponibles. Par exemple, l'objet graphique 54 permet de sélectionner le capteur 2 et l'objet graphique 56 permet de sélectionner le capteur 4.

Ainsi, dans le mode de réalisation de la figure 2, l'évaluation de prise de vue pour chaque capteur/mode de prise de vues peut être effectuée successivement.

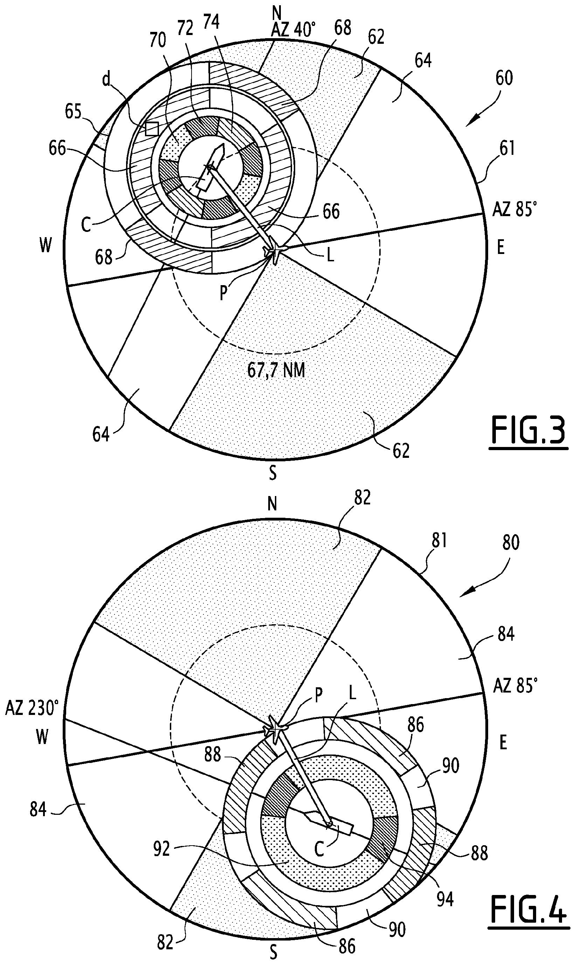

Selon un deuxième mode de réalisation illustré à la figure 3, les zones spatiales de prise de vue de chacun des capteurs disponibles sont affichées en superposition sur une même cartographie 60, dans un même périmètre 61 de représentation.

Le périmètre 61 contient donc la cartographie 60, rafraîchie en temps réel, des zones de qualité de prise de vue associées à plusieurs capteurs.

Le porteur P est au centre du périmètre 61, et l'objet d'intérêt C est situé à une distance D du porteur P, D=67,7 miles marins (NM) dans cet exemple. Dans la représentation graphique, le périmètre 61 et la distance entre porteur P et objet d'intérêt C sont normalisés. Avantageusement, une telle représentation normalisée facilite la compréhension de l'opérateur.

Le porteur P et l'objet d'intérêt C sont liés par une ligne de visée L.

Dans l'exemple de la figure 3, les points cardinaux Nord (N), Sud (S), Est (E), Ouest (O) sont indiqués, ainsi que les azimuts des trajectoires respectives du porteur P et de l'objet d'intérêt C.

De plus, les orientations respectives du porteur P et de l'objet d'intérêt C sont affichées. En variante, la valeur de l'angle de rotation relatif entre le porteur P et l'objet d'intérêt C, formé entre l'axe longitudinal du porteur P et l'axe longitudinal de l'objet d'intérêt C, est également affichée.

Dans l'exemple de la figure 3, la cartographie 60 indique en superposition les zones de qualité de prise de vue associées aux capteurs présents selon quatre modes de prise de vues d'images différents, à savoir : SPOT-SAR, SAR, DRP (pour « Dynamic Range Profile ») et FLIR.

Il est à noter qu'un même capteur embarqué peut réaliser plusieurs modes de prises de vues, par exemple les modes SAR et DRP.

La cartographie 60 affichée comprend une indication des zones 62, 64 associées à un premier capteur, selon un premier mode de prise de vues, qui est dans cet exemple le mode SPOT-SAR. Les zones 62, 64 sont déterminées par le module de calcul 24, de manière connue en soi, selon l'orientation du porteur P, indépendamment de l'orientation de l'objet d'intérêt C.

Par ailleurs, pour d'autres modes d'acquisition d'images, l'évaluation de qualité de prise de vues, et donc le calcul des zones spatiales de qualité associées, prend en compte également la position relative du porteur par rapport à l'objet d'intérêt.

Avantageusement, ces zones spatiales de qualité sont représentées sous forme de portions d'anneaux concentriques dont le centre est l'objet d'intérêt C, contenus dans un périmètre défini par un cercle externe 65 de rayon égal à la distance de représentation dans la cartographie 60 entre le porteur P et l'objet d'intérêt C, de manière à faciliter la représentation cartographique pour plusieurs modes d'acquisition considérés.

Le périmètre circulaire défini par le cercle 65 comprend toutes les zones de qualité de prise de vues associées aux modes d'acquisition pour lesquels la qualité de prise de vues dépend également de la position relative du porteur par rapport à l'objet d'intérêt.

Grâce à cette représentation, l'opérateur peut aisément analyser la situation des différents modes d'acquisition d'images et les qualités de prise de vue associées.

De préférence, la distance de positionnement des anneaux ou portions d'anneaux concentriques par rapport au centre C du cercle externe 65 est définie en fonction de la portée du capteur effectuant la prise de vues du mode d'acquisition correspondant. Ainsi, de préférence, les anneaux/portions d'anneaux les plus proches du cercle extérieur 65 correspondent au mode d'acquisition d'images de plus grande portée.

Dans l'exemple de la figure 3, les zones 66 correspondent à une qualité nominale de prise de vue par un deuxième capteur de type radar selon un deuxième mode de prise de vues d'images SAR.

Pour ce deuxième mode de prise de vues, l'orientation de l'objet d'intérêt, l'orientation du porteur et la distance entre le porteur et l'objet d'intérêt permettent de déterminer la faisabilité de l'acquisition d'images.

Dans l'exemple de la figure 3, la ligne de visée L intersecte les zones 66 de prise de vue nominale avec le deuxième capteur selon le deuxième mode de prise de vues, ce qui signifie que l'orientation du porteur P par rapport à l'objet d'intérêt C est bonne pour ce deuxième mode de prise de vues d'images.

Si la distance entre le porteur P et l'objet d'intérêt C est insuffisante, une indication visuelle est affichée pour alerter l'opérateur.

Par exemple, une valeur de distance d est indiquée, en lien avec la zone 66, la distance d étant la distance maximale à laquelle doit se trouver le porteur P par rapport à l'objet d'intérêt C pour effectuer la prise de vues. En variante, la distance restante à parcourir par le porteur pour se rapprocher de l'objet d'intérêt pour la prise de vue est indiquée.

De plus, afin de faciliter encore la compréhension de la situation globale par l'opérateur, dans ce mode de réalisation, la validité des conditions pour la prise de vue selon un mode d'acquisition est également représentée par la situation des zones spatiales de prise de vue par rapport au cercle externe 65.

Si les anneaux ou portions d'anneaux correspondant aux zones spatiales de prise de vue sont situés au niveau du cercle externe 65, ou collés à des anneaux/portions d'anneaux eux-mêmes situés au niveau du cercle externe 65, la distance entre porteur et objet d'intérêt est suffisante.

Par conséquent, la représentation de la figure 3 indique à un opérateur que les zones 66 ne sont pas encore atteignables, et qu'il est nécessaire de rapprocher le porteur P de l'objet d'intérêt C afin de réaliser une acquisition d'images selon le deuxième mode de prise de vues dans des conditions nominales.

Ainsi, la cartographie 60 apporte une information utile et facile à saisir pour aider l'opérateur à piloter le porteur P de manière à atteindre une zone de qualité de prise de vues suffisante permettant d'acquérir des images selon un mode de prise de vues donné.

Lorsque le porteur P se rapproche de l'objet cible C, la cartographie étant mise à jour en temps réel, la position des zones de prise de vue par rapport au cercle externe 65 ou par rapport aux zones déjà collées au niveau du cercle externe 65 est modifiée, pour indiquer, le cas échéant, une distance suffisante pour la prise de vues.

L'indication visuelle de distance restante à parcourir par le porteur est également modifiée, et elle disparaît lorsque le porteur est à distance suffisante de l'objet d'intérêt.

Les zones 68 correspondent à une qualité nominale de prise de vue par un troisième capteur de type radar selon un troisième mode de prise de vues d'images DRP.

Comme dans le cas du deuxième mode de prise de vues d'images, la distance entre le porteur P et l'objet d'intérêt C et l'orientation relative de l'objet d'intérêt C par rapport au porteur P, sont prises en compte pour l'évaluation du niveau de qualité de prise de vue et le calcul des zones 68.

Ainsi, dans l'exemple illustré en figure 3, pour ce troisième mode de prise de vues, la distance entre le porteur P et l'objet d'intérêt C est suffisante, puisque les zones 68 sont représentées au niveau du cercle 65. Par contre, l'orientation du porteur n'est pas satisfaisante, la ligne de visée L n'interceptant aucune des régions 68. Par conséquent, la cartographie 60 permet d'indiquer à l'opérateur qu'il doit effectuer une manoeuvre de changement de trajectoire afin d'acquérir des images selon le troisième mode de prise de vues.

Enfin, il est également illustré sur la figure 3 un ensemble de zones 70, 72, 74 correspondant à l'acquisition d'images selon un quatrième mode de prise de vues, qui est le mode FLIR.

Dans ce mode, la prise de vue est possible techniquement quelle que soit l'orientation de l'objet d'intérêt C par rapport au porteur P, mais cependant il est possible de calculer des zones fournissant une meilleure qualité en termes de contenu d'information en prenant en compte cette orientation. Ainsi, on distingue des zones 70 de qualité de prise de vue supérieure, de zones 72 de qualité nominale et des zones 74 de qualité dégradée. Dans l'exemple de la figure, si l'objet d'intérêt C est un bateau, les zones 74 correspondent à une prise de vue de face ou de dos, apportant moins d'informations qu'une prise de vue de côté.

En outre, pour ce quatrième mode de prise de vues d'images, la distance entre porteur P et objet d'intérêt C est également prise en compte pour déterminer la faisabilité de la prise de vues. Dans l'exemple représenté à la figure 3, selon la convention de représentation, la distance entre le porteur P et l'objet d'intérêt C est insuffisante, l'anneau correspondant étant à distance de l'anneau comprenant les zones 66.

En variante, l'indication de distance suffisante entre le porteur P et l'objet d'intérêt C est affichée différemment, par exemple par un choix de couleur de représentation des zones de prise de vue selon la suffisance ou non de la distance.

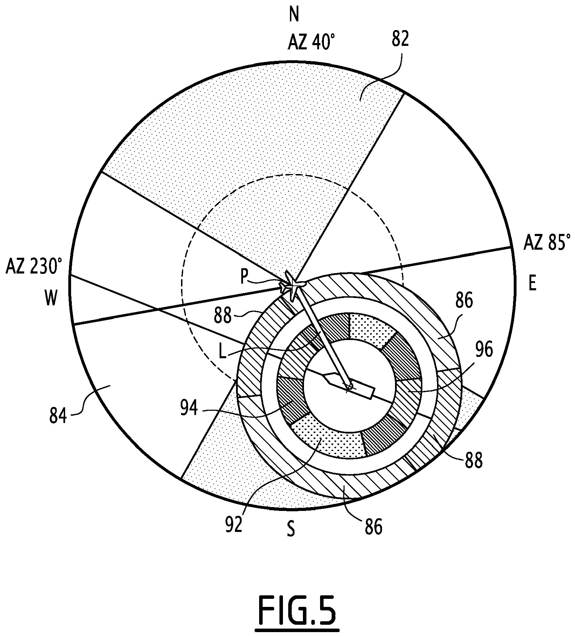

Les figures 4 et 5 représentent des variantes de représentation de la cartographie des zones spatiales de prise de vue, prenant en compte en outre des conditions externes d'environnement du porteur en plus des informations de position relative et absolue du porteur P et de l'objet d'intérêt C, par exemple les conditions météorologiques.

Ainsi, selon le mode de réalisation illustré en référence aux figures 4 et 5, le module de calcul 24 implémente un calcul de cartographie représentant la qualité de prise de vue des différents senseurs à un instant donné et prenant en compte des conditions météorologiques.

Par exemple, lorsque l'objet d'intérêt C est un bateau en navigation, les conditions maritimes « mer forte » ou « mer calme » sont également prises en compte.

Dans un cas analogue au cas décrit en référence à la figure 3, lorsque quatre modes de prise de vues sont considérés, la figure 4 illustre la cartographie 80 des zones de prise de vue en cas de « mer forte ».

La cartographie 80 représentée dans le périmètre 81, rafraîchie en temps réel, représente les zones de qualité de prise de vue associées aux quatre modes de prise de vues, selon les conditions d'environnement.

Le porteur P est au centre du périmètre 81, et l'objet d'intérêt C est situé à une distance D du porteur P. Le porteur P et l'objet d'intérêt C sont liés par une ligne de visée L. Comme dans l'exemple de la figure 3, les points cardinaux et les valeurs d'azimut des trajectoires respectives du porteur et de l'objet d'intérêt sont indiquées.

Les zones 82, 84 correspondent au premier mode de prise de vues. Les zones 86 sont les zones spatiales de niveau de qualité nominal du deuxième mode de prise de vues, les zones 88 sont les zones spatiales de niveau de qualité nominal du troisième mode de prise de vues.

Comme illustré sur la figure, il y a des zones 90, correspondant à un positionnement du porteur P par rapport à l'objet d'intérêt C dans lesquelles ni le deuxième mode de prise de vues, ni le troisième mode de prise de vues ne sont applicables.

En ce qui concerne le quatrième mode de prise de vues, les zones 92 et 94 correspondant respectivement à un niveau de qualité supérieur et à un niveau de qualité nominal sont présentes.

La figure 5 illustre la cartographie des zones de prises de vue correspondant à un même positionnement du porteur P et de l'objet d'intérêt C que dans l'exemple de la figure 4, mais dans le cas d'une mer calme.

Comme visible sur la figure 5, dans ce cas, les zones 86 et 88 se rejoignent, les zones 90 dans lesquelles la prise de vue est impossible ou fortement dégradée ayant disparu.

Par ailleurs, pour le quatrième mode de prise de vues, trois types de zones spatiales 92, 94 et 96, de niveaux de qualité respectivement supérieur, nominal et dégradé, sont distinguées.

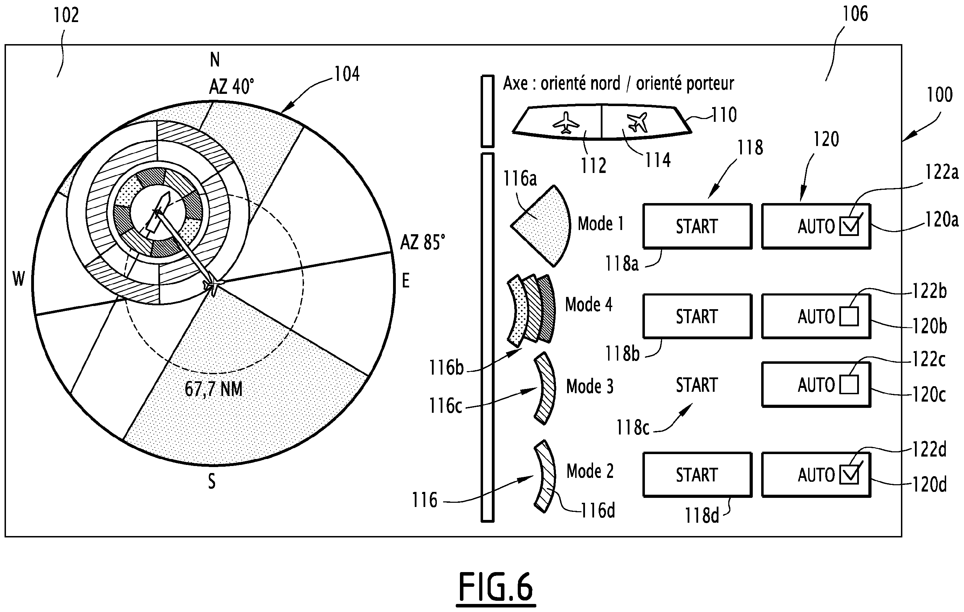

La figure 6 illustre un mode de réalisation d'une interface graphique 100 complète, comprenant, dans sa portion de gauche 102, une cartographie 104 des zones de qualité de prise de vue correspondant à quatre modes de prise de vues, analogue aux représentations illustrées aux figures 2 à 5.

Dans la portion de droite 106 de l'interface graphique 100, un panneau graphique d'information et de commande est affiché.

Un objet graphique de commande 110 permet de modifier l'orientation de représentation de la cartographie 104, entre une orientation « nord » sélectionnable via le bouton de commande 112 et une « orientation porteur » sélectionnable via le bouton de commande 114.

Une légende 116 indique les relations entre les capteurs/modes de prise de vues considérés et les indicateurs visuels 116a à 116d de zones spatiales de qualité visibles dans la portion de gauche 102.

Une série 118 de boutons de commande opérateur de prise de vue et une série 120 de boutons de commande de prise de vue automatique sont également présents. Ainsi, l'interface graphique 100 offre la possibilité de commander la prise de vue, pour chaque mode de prise de vues considéré, manuellement via les boutons 118a à 118d ou automatiquement via les boutons 120a à 120d.

Dans le mode de réalisation illustré à la figure 6, la commande automatique est optionnelle et le choix de l'option s'effectue via une activation d'un des boutons 122a à 122d, par un moyen de pointage approprié.

Ainsi, dans l'illustration de la figure 6, les modes de prise de vues 1 et 2 ont été sélectionnés pour une prise de vue automatique. Dans ce cas, lorsqu'une zone spatiale de qualité nominale est atteignable pour un parmi ces deux modes de prise de vues, ce mode est sélectionné automatiquement pour une prise de vue. Lorsque les deux modes de prise de vues sont utilisables en qualité nominale, le module de calcul 24 met en oeuvre une comparaison des niveaux de qualité respectifs associés et sélectionnent le mode parmi ces deux modes de prise de vues qui offre la meilleure qualité.

Il est à noter également que le bouton de commande 118c est non activable, ce qui est représenté par une absence de cadre sur la figure 6, car selon la cartographie 104, le porteur P est dans une position dans laquelle le troisième mode de prise de vues n'est pas utilisable avec une qualité de prise de vue nominale.

Ainsi, avantageusement, l'opérateur bénéficie d'une vision globale et claire de la qualité de prise de vue associée aux divers capteurs et modes de prise de vues disponibles, ainsi que d'outils de commande ergonomique associés. L'affichage de la cartographie étant rafraîchi en temps réel, et des indications de distance et d'orientation étant fournies, il est plus aisé pour l'opérateur d'orienter si nécessaire le porteur afin d'obtenir une acquisition d'images de l'objet d'intérêt qui ait un niveau de qualité satisfaisant.

L'invention a été décrite ci-dessus pour des capteurs de prises de vues données. Il est à noter que l'invention s'applique de manière générale, pour tout type de capteurs radars ou optroniques embarqués.

L'invention a été décrite dans un exemple d'application dans lequel le porteur de capteurs est un aéronef et l'objet d'intérêt est un navire. De manière plus générale, l'invention s'applique dans tout le domaine de l'imagerie air-surface, pour tout type d'objet d'intérêt situé sur la surface terrestre, par exemple des véhicules en déplacement sur le sol.

## Revendications

1. Terminal d'opérateur d'un système de mission comportant au moins un écran d'affichage (14) de données d'environnement d'un porteur (P) mobile d'un système d'analyse de situation, ledit système d'analyse comportant au moins un capteur (2, 4) d'images et des moyens (6) de fourniture en temps réel d'une position spatiale d'au moins un objet d'intérêt (C), comportant :
- un module (22) d'obtention d'au moins une information de position représentative de la position du porteur (P) et dudit au moins un objet d'intérêt (C),
- pour au moins un mode de prise de vues d'images d'un capteur d'images sélectionné, un module de calcul (24) apte à fournir au moins deux zones (50, 52, 62, 64, 66, 68, 70, 72, 74, 82, 84, 86, 88, 90, 92, 94, 96) de qualité de prise de vue distinctes, dans un périmètre spatial (46, 61, 81) prédéterminé centré sur la position du porteur (P), chaque zone de qualité de prise de vue ayant un niveau de qualité associé, et
- un module d'affichage (26) d'une cartographie (40, 60, 80, 104) desdites zones de qualité de prise de vue relativement à la position du porteur (P), dans le périmètre spatial (46, 61, 81) prédéterminé,
lesdits modules d'obtention (22), de calcul (24) et d'affichage (26) étant mis en oeuvre pour obtenir un rafraîchissement quasi temps réel de ladite cartographie (40, 60, 80, 104) affichée,
**caractérisé en ce que** le ou les capteurs d'images sont aptes à acquérir des images selon une pluralité de modes de prise de vues, **en ce que** le module de calcul de zones de qualité de prise de vue est mis en oeuvre pour chacun des modes de prise de vues, et **en ce que** le module d'affichage est apte à afficher, sur le même écran d'affichage, l'ensemble des zones de qualité de prise de vue relatives à chacun desdits modes de prise de vues.

2. Terminal d'opérateur selon la revendication 1, **caractérisé en ce qu'**il comporte, pour chaque mode de prises de vues, des zones de commande (118, 118a, 118b, 118c, 118d) de prise de vue par l'opérateur et des zones de commande (120, 120a, 120b, 120c, 120d) de prise de vue automatique, sélectionnables par l'opérateur et affichées sur le même écran d'affichage que ladite cartographie.

3. Terminal d'opérateur selon l'une quelconque des revendications précédentes, **caractérisé en ce que** le module d'affichage est apte à afficher en outre une indication visuelle relative de la position du porteur (P) par rapport à la position relative de l'objet d'intérêt (C).

4. Terminal d'opérateur selon l'une quelconque des revendications précédentes, **caractérisé en ce que** le module de calcul (24) est apte à déterminer au moins une zone de qualité de prise de vue ayant un niveau de qualité nominale et au moins une zone de qualité de prise de vue ayant un niveau de qualité dégradée.

5. Terminal d'opérateur selon l'une quelconque des revendications précédentes, **caractérisé en ce que** ladite cartographie représente ledit objet d'intérêt (C) à distance constante du porteur (P), et **en ce que** le module d'affichage (26) est apte à afficher des informations de distance réelle entre le porteur (P) et l'objet d'intérêt (C).

6. Terminal d'opérateur selon la revendication 5, **caractérisé en ce que** le module d'affichage (26) est apte à afficher une distance restante à parcourir par le porteur (P) pour atteindre une zone de qualité de prise de vue nominale selon un mode d'acquisition prédéterminé.

7. Terminal d'opérateur selon l'une quelconque des revendications 5 ou 6, **caractérisé en ce que** les zones de qualité de prise de vues affichées sont re-positionnées dans le périmètre spatial prédéterminé sensiblement en temps réel selon la distance réelle et les orientations relatives entre le porteur (P) et l'objet d'intérêt (C).

8. Terminal d'opérateur selon la revendication 7, **caractérisé en ce que** les zones de qualité de prise de vues sont affichées sous forme de portions d'anneaux concentriques, inscrits dans un périmètre circulaire centré sur l'objet d'intérêt et limité par un cercle externe (65), et **en ce que** la situation des anneaux concentriques par rapport au cercle externe indique si le porteur (P) est situé à distance suffisante de l'objet d'intérêt (C) pour atteindre une zone de qualité correspondante.

9. Terminal d'opérateur selon l'une quelconque des revendications précédentes, **caractérisé en ce que** le module d'obtention (22) d'au moins une information de position permet d'obtenir une distance entre le porteur (P) et l'objet d'intérêt (C) et un angle de rotation relatif entre l'objet d'intérêt (C) et le porteur (P).

10. Terminal d'opérateur selon l'une quelconque des revendications précédentes, **caractérisé en ce que** le module de calcul (24) prend en compte, pour la détermination des zones de qualité de prise de vues, des conditions externes d'environnement du porteur (P) et/ou de l'objet d'intérêt (C).

11. Système de mission comportant au moins un écran d'affichage de données d'environnement d'un porteur (P) mobile d'un système d'analyse de situation, ledit système d'analyse comportant au moins un capteur (2,4) d'images et des moyens (6) de fourniture en temps réel d'une position spatiale d'au moins un objet d'intérêt (C), **caractérisé en ce qu'**il comporte un terminal d'opérateur selon l'une quelconques des revendications 1 à 10.

## Patentansprüche

1. Bedienerendgerät für ein Einsatzsystem, aufweisend mindestens einen Bildschirm zum Anzeigen (14) von Umgebungsdaten eines mobilen Trägers (P) eines Situationsanalysesystems, wobei das Analysesystem mindestens einen Bildsensor (2, 4) und Mittel (6) zum Bereitstellen in Echtzeit einer räumlichen Position mindestens eines Objekts von Interesse (C) aufweist, aufweisend:
- ein Modul (22) zum Erhalten von mindestens einer Positionsinformation, die für die Position des Trägers (P) und des mindestens einen Objekts von Interesse (C) repräsentativ ist,
- für mindestens einen Modus zum Aufnehmen von Bildern eines ausgewählten Bildsensors ein Rechenmodul (24), das in der Lage ist, mindestens zwei unterschiedliche Aufnahmequalitätszonen (50, 52, 62, 64, 66, 68, 70, 72, 74, 82, 84, 86, 88, 90, 92, 94, 96) bereitzustellen, in einem vorbestimmten Raumumfang (46, 61, 81), der auf der Position des Trägers (P) zentriert ist, wobei jede Aufnahmequalitätszone ein zugeordnetes Qualitätsniveau hat, und
- ein Modul zum Anzeigen (26) einer Kartographie (40, 60, 80, 104) der Aufnahmequalitätszonen relativ zu der Position des Träges (P) in dem vorbestimmten Raumumfang (46, 61, 81),
wobei die Module zum Erhalten (22), zum Berechnen (24) und zum Anzeigen (26) ausgeführt werden, um eine Aktualisierung der angezeigten Kartographie (40, 60, 80, 104) quasi in Echtzeit zu erhalten,
**dadurch gekennzeichnet, dass** der oder die Bildsensoren in der Lage sind, Bilder gemäß einer Mehrzahl von Aufnahmemodi zu erhalten, dass das Modul zum Berechnen von Aufnahmequalitätszonen für jeden der Aufnahmemodi ausgeführt wird, und dass das Anzeigemodul in der Lage ist, auf dem gleichen Anzeigebildschirm die Gesamtheit der Aufnahmequalitätszonen bezüglich jedes der Aufnahmemodi anzuzeigen.

2. Bedienerendgerät gemäß Anspruch 1, **dadurch gekennzeichnet, dass** es für jeden Aufnahmemodus Befehlszonen (118, 118a, 118b, 118c, 118d) zum Aufnehmen durch den Bediener und Befehlszonen (120, 120a, 120b, 120c, 120d) zum automatischen Aufnehmen aufweist, die durch den Bediener auswählbar sind und auf dem gleichen Anzeigebildschirm wie die Kartographie angezeigt werden.

3. Bedienerendgerät gemäß irgendeinem der vorhergehenden Ansprüche, **dadurch gekennzeichnet, dass** das Anzeigemodul in der Lage ist, ferner eine relative visuelle Angabe der Position des Trägers (P) in Bezug auf die relative Position des Objekts von Interesse (C) anzuzeigen.

4. Bedienerendgerät gemäß irgendeinem der vorhergehenden Ansprüche, **dadurch gekennzeichnet, dass** das Rechenmodul (24) in der Lage ist, mindestens eine Aufnahmequalitätszone, die ein nominales Qualitätsniveau hat, und mindestens eine Aufnahmequalitätszone, die ein verschlechtertes Qualitätsniveau hat, zu bestimmen.

5. Bedienerendgerät gemäß irgendeinem der vorhergehenden Ansprüche, **dadurch gekennzeichnet, dass** die Kartographie das Objekt von Interesse (C) mit konstanter Entfernung von dem Träger (P) darstellt, und dass das Anzeigemodul (26) in der Lage ist, Informationen über eine tatsächliche Entfernung zwischen dem Träger (P) und dem Objekt von Interesse (C) anzuzeigen.

6. Bedienerendgerät gemäß Anspruch 5, **dadurch gekennzeichnet, dass** das Anzeigemodul (26) in der Lage ist, eine verbleibende Entfernung anzuzeigen, die durch den Träger (P) zurückzulegen ist, um eine nominale Aufnahmequalitätszone gemäß einem vorbestimmten Erfassungsmodus zu erhalten.

7. Bedienerendgerät gemäß irgendeinem der Ansprüche 5 oder 6, **dadurch gekennzeichnet, dass** die angezeigten Aufnahmequalitätszonen in dem vorbestimmten Raumumfang im Wesentlichen in Echtzeit gemäß der tatsächlichen Entfernung und den relativen Ausrichtungen zwischen dem Träger (P) und dem Objekt von Interesse (C) neu positioniert werden.

8. Bedienerendgerät gemäß Anspruch 7, **dadurch gekennzeichnet, dass** die Aufnahmequalitätszonen in Form von Abschnitten konzentrischer Ringe angezeigt werden, die in einem kreisförmigen Umfang, der auf dem Objekt von Interesse zentriert und durch einen äußeren Kreis (65) begrenzt ist, eingetragen sind, und dass die Situation der konzentrischen Ringe bezüglich des äußeren Kreises angibt, ob sich der Träger (P) in ausreichender Entfernung von dem Objekt von Interesse (C) befindet, um eine korrespondierende Qualitätszone zu erhalten.

9. Bedienerendgerät gemäß irgendeinem der vorhergehenden Ansprüche, **dadurch gekennzeichnet, dass** das Modul zum Erhalten (22) mindestens einer Positionsinformation ermöglicht, eine Entfernung zwischen dem Träger (P) und dem Objekt von Interesse (C) und einen relativen Rotationswinkel zwischen dem Objekt von Interesse (C) und dem Träger (P) zu erhalten.

10. Bedienerendgerät gemäß irgendeinem der vorhergehenden Ansprüche, **dadurch gekennzeichnet, dass** das Rechenmodul (24) für das Bestimmen der Aufnahmequalitätszonen äußere Umgebungsbedingungen des Trägers (P) und/oder des Objekts von Interesse (C) berücksichtigt.

11. Einsatzsystem, aufweisend mindestens einen Bildschirm zum Anzeigen von Umgebungsdaten eines mobilen Trägers (P) eines Situationsanalysesystems, wobei das Analysesystem mindestens einen Bildsensor (2, 4) und Mittel (6) zum Bereitstellen in Echtzeit einer räumlichen Position mindestens eines Objekts von Interesse (C) aufweist, **dadurch gekennzeichnet, dass** es ein Bedienerendgerät gemäß irgendeinem der Ansprüche 1 bis 10 aufweist.

## Claims

1. An operator terminal of a mission system comprising at least one screen (14) for displaying environmental data of a mobile carrier (P) of a situation analysis system, said analysis system including at least one image sensor (2, 4) and means (6) for providing a real-time spatial position of at least one object of interest (C), comprising:
- a module (22) for obtaining at least one piece of position information representative of the position of the carrier (P) and of said at least one object of interest (C),
- for at least one picture taking mode using a selected image sensor, a computing module (24) able to provide at least two different picture taking quality zones (50, 52, 62, 64, 66, 68, 70, 72, 74, 82, 84, 86, 88, 90, 92, 94, 96), in a predetermined spatial perimeter (46, 61, 81) centered on the position of the carrier (P), each picture taking quality zone having an associated quality level, and
- a module (26) for displaying a map (40, 60, 80, 104) of said picture taking quality zones relative to the position of the carrier (P), in the predetermined spatial perimeter (46, 61,81),
said obtaining (22), computing (24) and display (26) modules being implemented to obtain a quasi-real-time refresh of said displayed map (40, 60, 80, 104), **characterized in that** the image sensor(s) are able to acquire images according to a plurality of picture taking modes, and **in that** the picture taking quality zone computing module is implemented for each of the picture taking modes, and **in that** the display module is able to display, on the same display screen, all of the picture taking quality zones relative to each of said picture taking modes.

2. The operator terminal according to claim 1, **characterized in that** it includes, for each picture taking mode, control zones (118, 118a, 118b, 118c, 118d) for picture taking by the operator and control zones (120, 120a, 120b, 120c, 120d) for automatic picture taking, selectable by the operator and displayed on the same display screen as said map.

3. The operator terminal according to any one of the preceding claims, **characterized in that** the display module is further able to display a visual indication relative to the position of the carrier (P) with respect to the relative position of the object of interest (C).

4. The operator terminal according to any one of the preceding claims, **characterized in that** the computing module (24) is able to determine at least one picture taking quality zone having a nominal quality level and at least one picture taking quality zone having a deteriorated quality level.

5. The terminal operator according to any one of the preceding claims, **characterized in that** said map shows said object of interest (C) at a constant distance from the carrier (P), and **in that** the display module (26) is able to display actual distance information between the carrier (P) and the object of interest (C).

6. The operator terminal according to claim 5, **characterized in that** the display module (26) is able to display a distance remaining to be traveled by the carrier (P) to reach a nominal picture taking quality zone according to a predetermined acquisition mode.

7. The operator terminal according to any one of claims 5 to 6, **characterized in that** the displayed picture taking quality zones are repositioned in the predetermined spatial perimeter substantially in real-time based on the actual distance and the relative orientations between the carrier (P) and the object of interest (C).

8. The operator terminal according to claim 7, **characterized in that** the picture taking quality zones are displayed in the form of concentric ring portions, fitted in a circular perimeter centered on the object of interest and limited by an outer circle (65), and **in that** the situation of the concentric rings relative to the outer circle indicates whether the carrier (P) is situated at a sufficient distance from the object of interest (C) to reach a corresponding quality zone.

9. The operator terminal according to any one of the preceding claims, **characterized in that** the module (22) for obtaining at least one piece of position information allows obtaining a distance between the carrier (P) and the object of interest (C) and a relative rotation angle between the object of interest (C) and the carrier (P).

10. The operator terminal according to any one of the preceding claims, **characterized in that** the computing module (24) takes outside environment conditions of the carrier (P) and/or of the object of interest (C) into account to determine the picture taking quality zones.

11. A mission system including at least one screen for displaying environmental data of a mobile carrier (P) of a situation analysis system, said analysis system including at least one image sensor (2, 4) and means (6) for providing a real-time spatial position of at least one object of interest (C), **characterized in that** it comprises an operator terminal according to any one of claims 1 to 10.
